(19) Europäisches Patentamt / European Patent Office / Office européen des brevets

(11) **EP 4 064 148 A1**

(12) **EUROPEAN PATENT APPLICATION**

(43) Date of publication:
**28.09.2022 Bulletin 2022/39**

(21) Application number: **21165327.4**

(22) Date of filing: **26.03.2021**

(51) International Patent Classification (IPC):
**G06Q 10/04** $^{(2012.01)}$ **G06Q 10/06** $^{(2012.01)}$
**G06Q 10/00** $^{(2012.01)}$

(52) Cooperative Patent Classification (CPC):
**G06Q 10/20; G06Q 10/04; G06Q 10/06**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Nokia Solutions and Networks Oy 02610 Espoo (FI)**

(72) Inventors:
• **MAGGI, Lorenzo**
  **75013 PARIS (FR)**
• **LEE, Jeongran**
  **Basking Ridge, New Jersey 07920 (US)**
• **ANDREWS, Matthew**
  **Chatham, New Jersey 07928 (US)**

(74) Representative: **Loyer & Abello**
  **9, rue Anatole de la Forge**
  **75017 Paris (FR)**

(54) **APPPARATUS FOR PREDICTING MAINTENANCE ON A MEASUREMENT DEVICE**

(57) An apparatus for predicting maintenance comprises means for:
- Collecting a plurality of time series of measurements from a corresponding plurality of measurement sub-elements of the measurement device,
- Obtaining a matrix measurement signal comprising said time series of measurements,
- Applying a principal components analysis to the matrix measurement signal in order to obtain principal components of the matrix measurement signal, wherein the number of principal components is lower than the number of time series of measurements,
- Obtaining a reduced matrix measurement signal as a function of the matrix measurement signal and at least one of the principal components, wherein the reduced matrix measurement signal comprises principal time series of values along a first dimension, and principal values vectors along a second dimension,
- In response to detecting a change point in the distribution of the values of the principal time series, emitting a maintenance recommendation notification.

FIG. 1

EP 4 064 148 A1

**Description**

**Field**

Various embodiments relate to methods and apparatuses for recommending a maintenance intervention on a measurement device containing different measurement sub-elements. In particular, the methods and apparatuses are suitable for predicting maintenance when the number of measurement sub-elements is high. In some embodiments, the maintenance recommendation includes which measurement sub-elements the maintenance should be focused on.

**Background**

Rausand, M., Barros, A., & Hoyland, A. (2020). System reliability theory: models, statistical methods, and applications. John Wiley & Sons offers a method of predicting, at each time $t$, the remaining life time of a device, before it breaks down. However, this method does not provide a direct method for predicting a time when maintenance should be performed on the device in order to prevent its breakdown.

Wilson, Paul F., Larry D. Dell, and Gaylor F. Anderson. "Root Cause Analysis: A Tool for Total Quality Management." The Journal for Healthcare Quality (JHQ) 18.1 (1996): 40. proposes a method to find the cause of a breakdown through root cause analysis. Such a method is usually performed in hindsight, after a breakdown has occurred, and it is not designed either to detect problematic events when the device is still functioning.

U.S. Patent No. 6,847,918 offers an approach to predictive maintenance through hidden Markov models. But those methods rely on the strong model assumption that there exists a hidden "state", describing generally the device health, that evolves according to a homogeneous Markov chain i.e., the state evolution is memoryless and its characteristics do not change point. Thus, those models only perform well when this underlying assumption holds.

Truong, C., Oudre, L., & Vayatis, N. (2020). Selective review of offline change point detection methods. Signal Processing, 167, 107299 addresses the problem of predictive maintenance of a measurement device through anomaly or change-point detection. The goal is to detect when the measurement distribution changes, which is interpreted as a deterioration of the measurement device health. Such a technique suffers when the measurement device has a large number of measurement sub-elements producing measurements. Moreover, it does not offer a systematic approach to select the measurement sub-elements that are responsible for the change.

Therefore, a reliable method for predicting maintenance on a measurement device containing a large number of measurement sub-elements is needed, in order to be able to schedule a maintenance intervention and prevent the breakdown of the device.

**Summary**

In some example embodiments, the disclosure provides an apparatus for predicting maintenance on a measurement device. The apparatus comprises means for:

- Collecting a plurality of time series of measurements from a corresponding plurality of measurement sub-elements of the measurement device,
- Obtaining a matrix measurement signal comprising said time series of measurements,
- Applying a principal components analysis to the matrix measurement signal in order to obtain principal components of the matrix measurement signal, wherein the number of principal components is lower than the number of time series of measurements,
- Obtaining a reduced matrix measurement signal as a function of the matrix measurement signal and at least one of the principal components,

  wherein the reduced matrix measurement signal comprises:

  along a first dimension of the reduced matrix measurement signal, principal time series of values, wherein the number of principal time series of values is lower than the number of time series of measurements of the matrix measurement signal, and
  along a second dimension of the reduced matrix measurement signal, principal values vectors arranged in a chronological order, wherein each principal values vector is defined for a given time and contains the values of all the principal time series at the given time,

- Performing a change-point detection, wherein the change-point detection includes examining successive principal values vectors of the reduced matrix measurement signal, in order to detect at least one change in a distribution over time of the principal values vectors,

- In response to detecting a change point in the distribution over time of the principal values vectors, emitting a maintenance recommendation relating to maintenance of the measurement device.

Thanks to those features, the apparatus can analyze a low dimension signal, the reduced matrix measurement signal, to predict maintenance on the measurement device. Moreover, thanks to the features described above the apparatus is able to predict when maintenance should be scheduled on the measurement device. Indeed, a change point in the distribution over time of the principal values vectors is interpreted as a decrease in the performance of the measurement device, due to a potential malfunctioning. The fact of considering principal values vectors ensures that all the sub-elements of the measurement device may be taken into account. Indeed, a change point detected corresponds to a point where all principal time series jointly show a change in distribution. It is advantageous to analyze the values of all principal time series simultaneously in order to benefit from the most significant information produced by the principal component analysis about the matrix measurement signal.

In some example embodiments, such apparatus may optionally comprise one or more of the features below.

In various embodiments, the plurality of measurement sub-elements consists in a high number of sub-elements.

In an example embodiment, all time-series of measurements have the same number of measurements. In another further example embodiment, the matrix measurement signal is a matrix where each row corresponds to a time-series of measurements. In that embodiment, each row corresponds to a measurement sub-element and there are as many rows as measurement sub-elements. Each column then corresponds to a time step, and there are as many columns as times in the time-series. In another further example embodiment, the matrix measurement signal is a matrix where each column corresponds to a time-series of measurements. In that embodiment, each column corresponds to a measurement sub-element and there are as many columns as measurement sub-elements. Each row then corresponds to a time step, and there are as many rows as times in the time-series. Thanks to these features, the measurements corresponding to the different measurement sub-elements are represented in a way which is convenient for further calculations.

In an example embodiment where the matrix measurement signal is a matrix where each row corresponds to the time-series measurement performed by a measurement sub-element, the reduced matrix measurement signal corresponds to a matrix with a lower number of rows than the matrix measurement signal. In that particular embodiment, each row of the reduced matrix measurement signal is a principal time series, and each column of the matrix measurement signal is a principal values vector. In other words, the apparatus performs the change-point detection by examining successive columns of the reduced matrix measurement, in order to detect a change over time in the distribution of the columns of the matrix measurement signal.

In an example embodiment where the dimension of the principal values vectors is $D$ (meaning that there are $D$ principal time series), the distribution over time of successive principal values vectors is defined as the $D$-dimensional distribution over time of the coordinates of the said principal values vectors.

In an example embodiment, a change point in the distribution overtime of successive principal values vectors can be defined as a change over time in the mean of the coordinates of the successive principal values vectors in a time interval. In another example embodiment, a change point of the distribution over time of successive principal values vectors can be defined as a change in the variance of the coordinates of the successive principal values vectors in a time interval.

In various example embodiments, the apparatus further comprises means for, in response to detecting a change point in the distribution over time of successive principal values vectors, emitting a maintenance recommendation notification. In some example embodiments, the number of measurement sub-elements is higher than 20. In other example embodiments, the number of measurement sub-elements is comprised between 200 and 400. In an example embodiment, the measurement sub-elements perform measurements on a different entity at some or each instant of time, i.e. the entities on which the measurements are performed change point. In that case, at each time $t$, a measurement on a new entity is performed. The successive entities on which measurements are performed may further be chosen among entities with characteristics identically distributed over time, e.g. a series of products that are identically manufactured. In that case, the entity on which the measurement sub-elements perform measurements is a product the performance of which is tested. In that case, the measurement device for which the apparatus predicts maintenance is a tester for that product. For instance, the entity can be an electronic device. In an example embodiment, the entity is a base-station. In that case, there can be 200 measurement sub-elements, e.g. sensors which measure for instance power amplification, power gain, current... In that embodiment, measurements may be performed on a new base station at each time $t$.

In another example embodiment, a same entity is measured over time. In that case, in an example embodiment, the entity may be an indoor or outdoor environment and the measurement sub-elements of the measurement device may be a collection of ambient sensors which can monitor current temperature or humidity. In another example embodiment, the entity may be a human body and measurement the measurement sub-elements of the measurement device may be measurement apparatuses for measuring for instance the heart beat rate, glucose rate or percentage of oxygen-saturated hemoglobin in the blood.

In an example embodiment, where the matrix measurement signal is a matrix where each row corresponds to a time-series of measurements, the means for applying a principal component analysis perform the following steps:

- Computing a mean matrix. The mean matrix has as many rows and as many columns as the matrix measurement signal, each row of the mean matrix corresponds to a row of the matrix measurement signal and each row of the mean matrix contains a same mean value for each row, the mean value being equal to the mean of the corresponding time-series of measurements.
- Computing a difference matrix. The difference matrix is equal to the matrix measurement signal minus the mean matrix
- Computing a covariance matrix by multiplying the difference matrix by the transpose of the covariance matrix
- Computing eigenvectors of the covariance matrix
- Obtaining the principal components by selecting the eigenvectors corresponding to the highest eigenvalues until having selected a number of eigenvectors that reaches a dimension threshold. In an example embodiment, the dimension threshold is a predefined number. In a further example embodiment, this predefined number can be comprised between 1 and 4. In another embodiment, the dimension threshold is computed while performing the principal components analysis.

In an example embodiment, the principal component analysis is a Bayesian Principal Components Analysis. Thanks to this feature, the number of principal components can be computed at the same time as the principal components. Indeed, the number of principal components can be computed as the dimensionality of the most likely latent signal that was generated from the dataset.

In an example embodiment, the means for obtaining the reduced matrix measurement signal perform a projection of the matrix measurement signal on the subspace generated by the principal components. In an example embodiment where the matrix measurement signal is a matrix where each row corresponds to a time-series of measurements, performing the projection includes the following steps:

- Computing a principal components matrix where each column contains the coordinates of one of the principal components.
- Computing the transpose of the matrix measurement signal.
- Computing a projected matrix, the projected matrix being the product of the transpose of the matrix measurement signal by the principal components matrix.
- Computing the reduced matrix measurement signal by taking the transpose of the projected matrix.

In an example embodiment, the means for performing a change-point detection include:

- homogeneity computation means for computing for several sets of successive principal values vectors a homogeneity measurement representing how homogeneous the distribution of the said set of successive principal values vectors is.
- change-point finding means for finding change points. The change points are points in time, and they delimit homogeneous intervals. A homogeneous interval is a set of successive principal values vectors delimited by the change points. The change points and homogeneous intervals are such that the distribution of the principal values vectors is homogeneous in a homogeneous interval and substantially changes at a change point. In an example embodiment, homogeneous intervals are sets of successive principal values vectors comprised between two successive change points except for a first homogeneous interval and a last homogeneous interval. The first homogeneous interval is delimited by the time of the first measurement and the first change point, and the last homogeneous interval is delimited by the last change point and the time of the last measurement. As the principal values vectors contain values of all the principal time series, the homogeneous intervals also define sets of successive values of the principal time series of values where the distribution of the values is homogeneous. In an optional example embodiment, such a substantial change of the distribution of the principal values vectors between two successive homogeneous intervals can be translated by a variation of the mean of the principal values vectors of a homogeneous interval higher than a threshold between two successive homogeneous intervals. In another example embodiment, wherein the distribution the coordinates of the principal values vectors is parametric, a substantial change in the distribution of the principal values vectors between two successive homogeneous intervals can be translated by a change higher than a threshold in the parameter of the parametric distribution of the coordinates of the principal values vectors. In an optional example embodiment where the number of change-points may not be predefined, finding change points may also mean finding the number of change points.

In an example embodiment, the homogeneity measurement is the variance of the set of principal values vectors for which the homogeneity measurement is computed. In another example embodiment, the homogeneity measurement is the negative log-likelihood of the set of principal values vectors for which the homogeneity measurement is computed. Thanks to one of those features, the homogeneity measurement represents a homogeneous distribution of the values of the principal time series over time.

In an example embodiment, the means for finding a number of change points and change points include means for minimizing a function of the homogeneity measurement. In an example embodiment, the function of the homogeneity measurement is the sum of homogeneity measurement s of intervals defined by a set a of change points minus a multiplicative factor multiplied by a number of change points. In that embodiment, the multiplicative factor can be a tunable parameter regulating the number of change points to detect: the higher the multiplicative factor is, the fewer change points are detected. In an example embodiment, the means for minimizing the function of the homogeneity measurement perform an algorithm implemented with dynamic programming. In an example embodiment, this algorithm is "forward dynamic programming", as defined in Y. Guédon, Exploring the latent segmentation space for the assessment of multiple change-point models, Comput. Stat. 28 (6) (2013) 2641-2678. In another example embodiment, this algorithm is "pruned optimal dynamic programming", as defined in Rigaill, G. (2015). A pruned dynamic programming algorithm to recover the best segmentations with 1 to K_max change-points. Journal de la Société Française de Statistique, 156(4), 180-205.

In an embodiment where the measurement sub-elements of the measurement device perform measurements on a same entity over time (for instance, the outdoor environment or the human body), the detection of a change point requires an additional check on the measurement device to determine if the maintenance notification would actually be useful to prevent a breakdown of the measurement device. This additional check can consist in checking if there has been a change in the properties of the entity which could justify a change in the distribution of the values of the principal time series. For instance, if the entity is the outdoor environment, and a measurement sub-element measures weather conditions with a distribution of the measurements changing over time, this additional check can be checking if there has been an actual change in the weather conditions. If there has been such a change, the notification for maintenance would be a false alarm because the measurement device had no reason not to measure that change. Such an additional check can be performed by a human operator.

In an example embodiment, the apparatus further comprises means for computing respective contributions of the measurement sub-elements to at least one of the principal components. In that case, emitting a maintenance recommendation notification includes identifying candidate faulty measurement sub-elements of the measurement device as a function of respective contributions of the measurement sub-elements. Thanks to those features, it is possible to predict which measurement sub-elements the maintenance should be focused on, and therefore to identify which measurement sub-elements could potentially suffer of a malfunctioning. In an example embodiment, the candidate faulty measurement sub-elements can be identified as the measurement sub-elements of which the contribution to at least one of the principal component exceeds a threshold. In an embodiment, this threshold can be 10%. In another example embodiment, the apparatus further comprises means for sorting in decreasing order the contributions of the measurement sub-elements to at least one of the principal component. In that embodiment, the candidate faulty measurement sub-elements can be identified as the first measurement sub-elements having the first $h$ highest contributions to at least one principal component, where $h$ is a predefined number. In an example embodiment, $h$ is a tunable parameter.

In an example embodiment, the contribution of a measurement sub-element to a principal component can be defined as the absolute value of the projection of the principal component on this sub-element divided by the sum of the absolute values of the coordinates of the principal component. In the embodiment described above where the matrix measurement signal consists in a matrix where each row corresponds to a time-series of measurements performed by a measurement sub-element and the principal component analysis comprises the steps mentioned above, it is sufficient, to compute the contribution of the i-th sub-element (given a total number d of measurement sub-elements greater or equal to i) to the principal component, to compute the absolute value of the i-th coordinate of the principal component divided by the sum of the absolute values of all coordinates of the principal component. It is then clear that the grater the contribution to a measurement sub-element to a principal component is, the more that sub-element is a main contributor to the principal component.

In an example embodiment, the apparatus comprises means for visualizing an evolution of the reduced matrix measurement signal over time and, in response to detecting a change point in the distribution of the principal values vectors, visualizing the detected time at which the distribution of the principal values vectors changes. The change points correspond to times at which the distributions of the values of all principal time series jointly change. In an example embodiment, visualizing the evolution of the reduced matrix measurement signal can consist in displaying the evolution of the principal time series of values on a graph (x,y) where x represents the times and y the values, along with vertical lines in correspondence of the detected change points.

In some example embodiments, the means in the apparatus further comprises:

at least one processor; and
at least one memory including computer program code, the at least one memory and computer program code configured to, with the at least one processor, cause the performance of the apparatus.

The at least one memory and the computer program code may be configured to, with the at least one processor, cause the apparatus to:

- Collect a plurality of time series of measurements from a corresponding plurality of measurement sub-elements of the measurement device,
- Obtain a matrix measurement signal comprising said time series of measurements,
- Apply a principal components analysis to the matrix measurement signal in order to obtain principal components of the matrix measurement signal, wherein the number of principal components is lower than the number of time series of measurements,
- Obtain a reduced matrix measurement signal as a function of the matrix measurement signal and at least one of the principal components, wherein the reduced matrix measurement signal comprises:

  along a first dimension of the reduced matrix measurement signal, principal time series of values, wherein the number of principal time series of values is lower than the number of time series of measurements of the matrix measurement signal, and
  along a second dimension of the reduced matrix measurement signal, principal values vectors arranged in a chronological order, wherein each principal values vector is defined for a given time and contains the values of all the principal time series at the given time,

- Perform a change-point detection, wherein the change-point detection includes examining successive principal values vectors of the reduced matrix measurement signal, in order to detect at least one change in a distribution over time of the principal values vectors,
- In response to detecting a change point in the distribution over time of the principal values vectors, emit a maintenance recommendation relating to maintenance of the measurement device.

The at least one memory and the computer program code may further be configured to, with the at least one processor, cause the apparatus to compute respective contributions of the measurement sub-elements to at least one of the principal components. In that embodiment, the maintenance recommendation includes the identification of candidate faulty measurement sub-elements of the measurement device as a function of respective contributions of the measurement sub-elements.

The at least one memory and the computer program code may further be configured to, with the at least one processor, cause the apparatus to visualize an evolution of the reduced matrix measurement signal over time and, in response to detecting a change point in the distribution of the principal values vectors, visualize the detected time at which the distribution of the principal values vectors changes.

In some example embodiments, the disclosure also provides a computer-implemented method for predicting maintenance on a measurement device. The computer-implemented method comprises the steps of

- Collecting a plurality of time series of measurements from a corresponding plurality of measurement sub-elements of the measurement device,
- Obtaining a matrix measurement signal comprising said time series of measurements,
- Applying a principal components analysis to the matrix measurement signal in order to obtain principal components of the matrix measurement signal, wherein the number of principal components is lower than the number of time series of measurements,
- Obtaining a reduced matrix measurement signal as a function of the matrix measurement signal and at least one of the principal components, wherein the reduced matrix measurement signal comprises:

  along a first dimension of the reduced matrix measurement signal, principal time series of values, wherein the number of principal time series of values is lower than the number of time series of measurements of the matrix measurement signal, and
  along a second dimension of the reduced matrix measurement signal, principal values vectors arranged in a chronological order, wherein each principal values vector is defined for a given time and contains the values of all the principal time series at the given time,

- Performing a change-point detection, wherein the change-point detection includes examining successive principal values vectors of the reduced matrix measurement signal, in order to detect at least one change in a distribution over time of the principal values vectors,
- In response to detecting a change point in the distribution over time of the principal values vectors, emitting a maintenance recommendation relating to maintenance of the measurement device

In some example embodiments, such a method may further comprise one or more of the features below.

In an example embodiment, the method further comprises the step of computing respective contributions of the measurement sub-elements to the principal components and wherein emitting a maintenance recommendation notification includes identifying candidate faulty measurement sub-elements of the measurement device as a function of respective contributions of the measurement sub-elements.

In an example embodiment, the method further comprises the step of visualizing an evolution of the reduced matrix measurement signal over time and, in response to detecting a change point in the distribution of the principal values vectors, visualizing the detected time at which the distribution of the principal values vectors changes.

In an example embodiment, the method further comprises sorting the contribution of the measurement sub-elements to a principal component in decreasing order and wherein the candidate faulty measurement sub-elements are a predefined number of measurement sub-elements having the highest contribution to the principal components according to the sorting of the contribution of the measurement sub-elements in decreasing order.

In example embodiments, the disclosure also provides a computer program comprising executable code that causes a computer to perform the steps of such method when executed.

In some example embodiments, the disclosure also provides an apparatus comprising:

- A collecting circuitry configured to collecting a plurality of time series of measurements from a corresponding plurality of measurement sub-elements of the measurement device,
- A circuitry configured to obtain a matrix measurement signal comprising said time series of measurements,
- A principal component analysis circuitry configured to apply a principal components analysis to the matrix measurement signal in order to obtain principal components of the matrix measurement signal, wherein the number of principal components is lower than the number of time series of measurements
- A reduction circuitry configured to obtain a reduced matrix measurement signal as a function of the matrix measurement signal and at least one of the principal components, wherein the reduced matrix measurement signal comprises:

   along a first dimension of the reduced matrix measurement signal, principal time series of values, wherein the number of principal time series of values is lower than the number of time series of measurements of the matrix measurement signal, and

   along a second dimension of the reduced matrix measurement signal, principal values vectors arranged in a chronological order, wherein each principal values vector is defined for a given time and contains the values of all the principal time series at the given time,

- A change-point detection circuitry configured to perform a change-point detection, wherein the change-point detection includes examining successive principal values vectors of the reduced matrix measurement signal, in order to detect at least one change in a distribution over time of the principal values vectors,
- A recommendation circuitry, configured to, in response to detecting a change point in the distribution over time of the principal values vectors, emit a maintenance recommendation relating to maintenance of the measurement device

In an example embodiment, the disclosure also provides an apparatus further comprising a contribution circuitry configured to compute respective contributions of the measurement sub-elements to the principal components and wherein the recommendation circuitry comprises an identification circuitry configured to identify candidate faulty measurement sub-elements of the measurement device as a function of respective contributions of the measurement sub-elements.

In an example embodiment, the disclosure also provides an apparatus further comprising a visualization circuitry configured to visualize an evolution of the reduced matrix measurement signal over time and, in response to detecting a change point in the distribution of the principal values vectors, visualize the detected time at which the distribution of the principal values vectors changes.

In an example embodiment, the apparatus may comprise non-transitory computer readable medium comprising program instructions for causing the apparatus to perform at least the following:

- Collecting a plurality of time series of measurements from a corresponding plurality of measurement sub-elements of the measurement device,
- Obtaining a matrix measurement signal comprising said time series of measurements,
- Applying a principal components analysis to the matrix measurement signal in order to obtain principal components of the matrix measurement signal, wherein the number of principal components is lower than the number of time series of measurements,
- Obtaining a reduced matrix measurement signal as a function of the matrix measurement signal and at least one of the principal components, wherein the reduced matrix measurement signal comprises:

along a first dimension of the reduced matrix measurement signal, principal time series of values, wherein the number of principal time series of values is lower than the number of time series of measurements of the matrix measurement signal, and
along a second dimension of the reduced matrix measurement signal, principal values vectors arranged in a chronological order, wherein each principal values vector is defined for a given time and contains the values of all the principal time series at the given time,

- Performing a change-point detection, wherein the change-point detection includes examining successive principal values vectors of the reduced matrix measurement signal, in orderto detect at least one change in a distribution over time of the principal values vectors,
- In response to detecting a change point in the distribution over time of the principal values vectors, emitting a maintenance recommendation relating to maintenance of the measurement device

In an example embodiment, the apparatus may further comprise non-transitory computer readable medium comprising program instructions for causing the apparatus to compute respective contributions of the measurement sub-elements to the principal components and wherein the recommendation circuitry comprises an identification circuitry configured to identify candidate faulty measurement sub-elements of the measurement device as a function of respective contributions of the measurement sub-elements.

In an example embodiment, the apparatus may further comprise non-transitory computer readable medium comprising program instructions for causing the apparatus to visualize an evolution of the reduced matrix measurement signal over time and, in response to detecting a change point in the distribution of the principal values vectors, visualize the detected time at which principal values vector changes.

**Brief description of the drawings**

These and other aspects of the invention will be apparent from and elucidated with reference to example embodiments described hereinafter, by way of example, with reference to the drawings.

FIG. 1 represents a system comprising an apparatus for predicting maintenance on a measurement device and the measurement device with which the apparatus interacts, according to an example embodiment
FIG. 2 is a functional diagram representing a method of predicting maintenance which may be performed by the apparatus according to the embodiment of FIG. 1.
FIG. 3 is a diagram showing mathematical operations involved in step 22 of FIG. 2
FIG. 4 is an illustration of a principal component analysis in two dimensions
FIG. 5 is a graph showing the evolution of principal components including the results of the change point detection, according to the example embodiment of FIG. 2
FIG. 6 is a functional diagram of a programmed computer in which example embodiments of the invention may be implemented.
FIG. 7 represents a reduced matrix measurement signal in an embodiment.

**Detailed description of the embodiments**

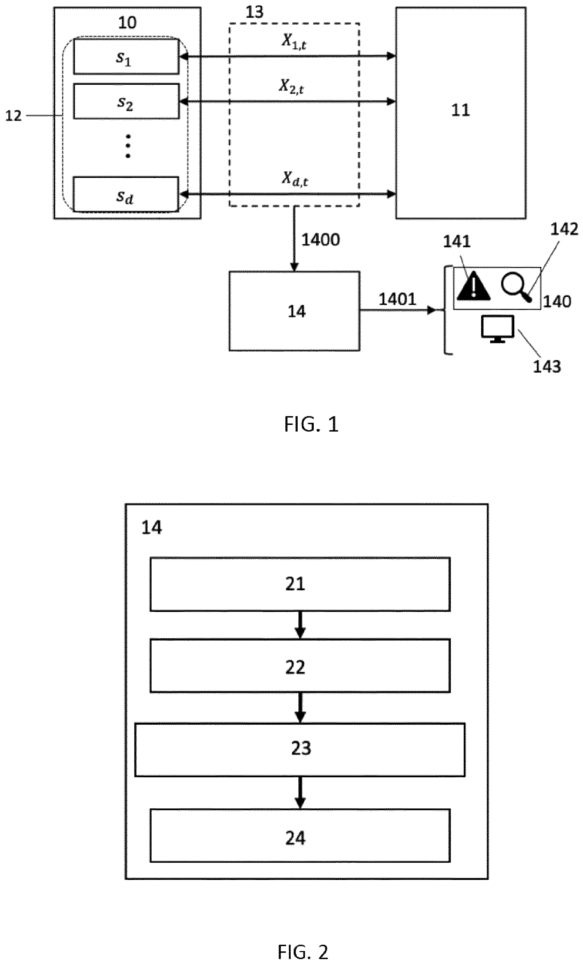

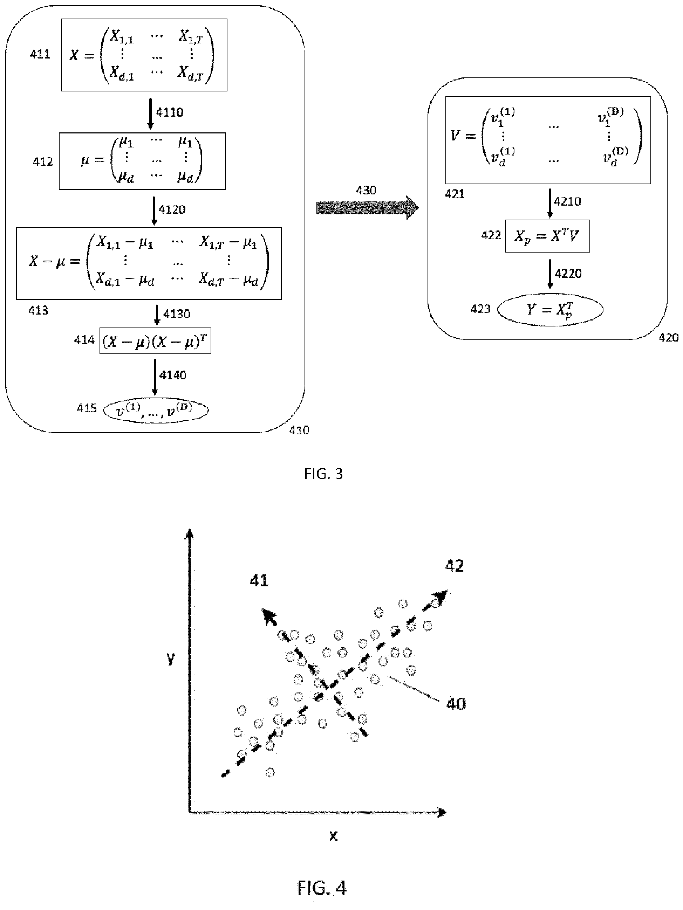

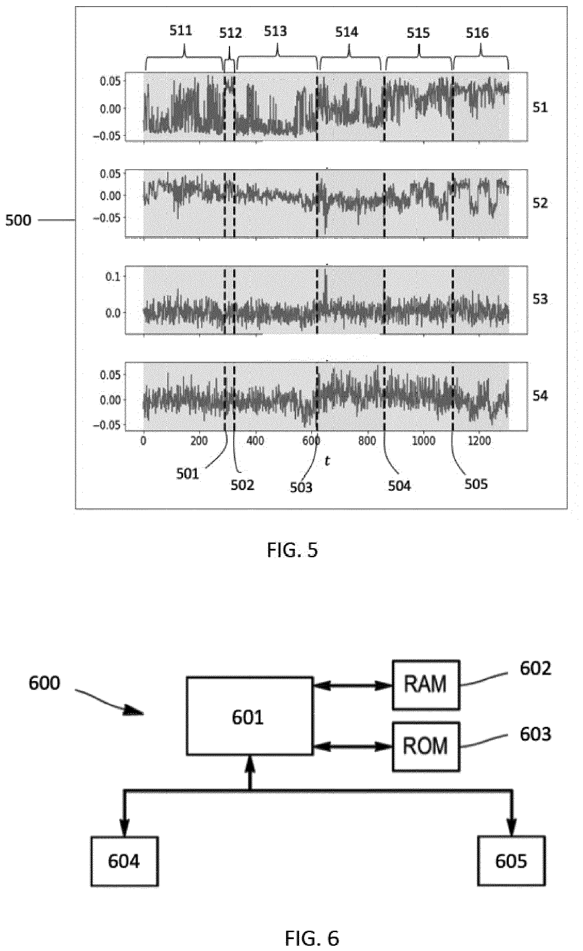

In an example embodiment shown in FIG.1, the measurement device 10 contains $d$ measurement sub-elements $s_1$, $s_2$, ..., $s_d$. At each time $t$, each sub-element $s_i$ performs a measurement $X_{i,t}$ on an entity 11, which may be the same entity over time or a series of different entities overtime. Thus, at each time $t$, the measurement device 10 produces a set of measurements 13. In some example embodiments, the entity 11 can be a product which needs to be tested before being commercialized. For instance, the entity 11 can be a base-station, and each measurement $X_{i,t}$ thus represents a propriety of the base-station (e.g., power amplification, power gain, current...). The number of measurement sub-elements $d$ can be very high (usually between 20 and 400). In the particular embodiment of a base station, $d$ is a number between 200 and 400. If a product is tested before being commercialized, there are usually several identical products to be tested, which are planned to be all commercialized at once. In that case, measurements are performed once on a product in order to check if it fulfills some predefined quality criteria. Thus, the entity 11 changes over time. In the embodiment where the entity 11 is a base-station, measurements on a different base-station are performed at each time $t$. For instance, if there are T identical base-stations to be commercialized, T series of measurements 13 are performed, one on each base-station, to check that all T base-stations fulfill the quality criteria. Mathematically, the assumption that all T base-stations are identical translates by the assumption that at each time $t$ a new base-station is drawn independently from a pool of base-stations with identically distributed properties. Thus, it is expected that for each $i \in \{1, ..., d\}$, $X_{i,t}$ is identically distributed for every $t$. This means that a given measurement by a measurement sub-element is supposed to be identically distributed over time. Therefore, the need for scheduling maintenance on the measurement device 10 can be detected by detecting a change in the distribution of the sets of measurements 13 over time. However, the high number of measurement sub-elements does not allow direct computations for detecting such a change and further manipulation of the data is needed. The set of measurements 13 is collected by an apparatus for predicting maintenance 14 at each time $t$. This data is further processed in order to obtain a matrix measurement signal comprising the entire time series of measurements, from time 0 to time T, for each sub-element. Such a matrix measurement signal 411 is represented in FIG. 3. In that embodiment, the matrix measurement signal 411 is represented as a matrix of which rows are time-series of measurements for each sub-element. In another example embodiment, the matrix measurement signal can be represented as the transpose of the matrix measurement signal 411, as a matrix where every column is a time-series of measurements for a measurement sub-element. The collection and processing of data to obtain a matrix measurement signal is represented by arrow 1400. This matrix measurement signal is further analyzed. The steps of the data analysis according to an example embodiment are represented in FIG. 2. After analyzing the matrix measurement signal, the apparatus for predicting maintenance 14 produces an output as represented by arrow 1401 of FIG. 1. This output contains a maintenance recommendation 140. In the example embodiment presented in FIG. 1, this maintenance recommendation includes both a notification for scheduling maintenance 141 and details about candidate faulty measurement sub-elements 142 on which the maintenance should be focused. Another output of the data analysis can be data visualization 143. An example of data visualization output is presented in FIG. 5.

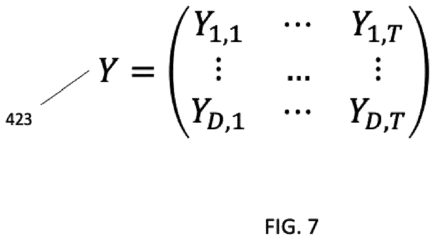

FIG. 2 represents the data analytics process performed by the apparatus 14 on the matrix measurement signal in order to emit a maintenance recommendation. First, the apparatus 14 performs a dimensionality reduction 21 on the matrix measurement signal. This dimensionality reduction 21 is represented in detail in FIG. 3. Its two main steps are: performing a principal components analysis 410 in order to obtain principal components 415 of the matrix measurement signal 411, then obtaining a reduced matrix measurement signal 423 as shown by step 420 in FIG. 3. FIG. 3 is explained in more detail below. FIG. 7 shows an example of such a reduced matrix measurement signal 423, denoted by Y. The reduced matrix measurement signal 423 comprises, along a first dimension, principal time-series of values. In the embodiment represented in FIG. 3 and FIG. 7, the principal time series of values are the rows of the reduced matrix measurement signal 423. Here, $(Y_{i,1}\ Y_{i,2} ... Y_{i,T})$ is the $i$-th principal time series of values. The reduced matrix measurement signal 423 contains D principal time series. The number of principal time series of the reduced matrix measurement 423 is lower than the number of time series of measurements of the matrix measurement signal 411. This can be translated by the fact that the number of rows of the reduced matrix measurement signal 423 is lower than the number of rows of the matrix measurement signal 411. In other words, $D < d$, where $d$ is the number of sub-elements. The reduced matrix measurement signal 423 comprises, along a second dimension, principal values vectors. In the embodiment represented in FIG. 7, the principal values vectors are the columns of the reduced matrix measurement signal 423. There are T such vectors, one for each time of the set of times $\{1, 2, ..., T\}$. The dimension of the principal values vectors is the number of principal time series. In other words, each principal values vector is defined by D coordinates. For instance,

$$ Y_t = \begin{pmatrix} Y_{1,t} \\ \vdots \\ Y_{D,t} \end{pmatrix} $$

is the principal values vector corresponding to time $t$.

The second step shown in FIG. 2 is a change-point detection 22. The apparatus 14 performs this change-point detection on the reduced matrix measurement signal 423. The change-point detection includes detecting if there are points in time at which the distribution of the principal values vectors varies. In the embodiment represented in FIG. 3 and FIG. 7, this can mean searching for times $t$ at which the distribution of the principal values vectors of the reduced matrix measurement signal 423 changes. In practice, this can correspond to detecting a change in the $D$-dimensional mean of successive column vectors $Y_t$ (with $t$ fixed) of the reduced matrix measurement signal 423. In an example embodiment, the means of the apparatus 14 for computing the change-point detection include means for computing a homogeneity measurement for sets of successive values of a principal time series. This homogeneity measurement can be noted as $c(Y_{t_1:t_2})$, where $c(Y_{t_1:t_2})$ stands for a measure of the homogeneity of values $Y_{t_1}$, $Y_{t_1+1}, ..., Y_{t_2}$ where $Y_t$ is $D$-dimensional. In the embodiment represented in FIG. 3, $Y_{t_1}, Y_{t_1+1}, ..., Y_{t_2}$ are columns of the reduced measurement signal 423 comprised between the indices of column $t_1$ and $t_2$. In an example embodiment, $c(Y_{t_1:t_2})$ is the variance of the corresponding vectors. In another example embodiment, $c(Y_{t_1:t_2})$ is the negative maximum log-likelihood of the corresponding vectors. In various example embodiments, the smaller $c$ is, the more homogeneous the samples $Y_{t_1}$, $Y_{t_1+1}, ..., Y_{t_2}$ are in the interval between $t_1$ and $t_2$. In an example embodiment, the apparatus 14 further comprises means for finding the change points $\overline{t}_1, ..., \overline{t}_K$ that maximize the homogeneity of the whole reduced matrix measurement signal 423. In an example embodiment, this corresponds to solving the problem

$$\overline{t}_1, ..., \overline{t}_{\overline{K}}, \overline{K} = \underset{t_1,...,t_K,K}{\operatorname{argmin}} \sum_{i=1}^{K} c\left(Y_{t_i:t_{i+1}}\right) - \lambda K$$

$\lambda$ is a tunable parameter that regulates the number of change points detected; the higher $\lambda$, the fewer change points are detected. In an example embodiment, the apparatus 14 further comprises means for implementing a dynamic programming algorithm to solve the above optimization problem. In an example embodiment, this algorithm is "forward dynamic programming", as defined in Y. Guédon, Exploring the latent segmentation space for the assessment of multiple change-point models, Comput. Stat. 28 (6) (2013) 2641-2678. In another example embodiment, this algorithm is "pruned optimal dynamic programming", as defined in Rigaill, G. (2015). A pruned dynamic programming algorithm to recover the best segmentations with 1 to K_max change-points. Journal de la Société Française de Statistique, 156(4), 180-205. The intervals comprised between the change points detected are homogeneous intervals, which means that the distribution of $Y_t$ is uniform over time in those intervals.

After the change-point detection 22, the next step of the maintenance prediction process performed by apparatus 14 and represented in FIG. 2 is emitting a maintenance recommendation 140, as represented by step 23 in FIG. 2. The maintenance recommendation contains a notification 141 for scheduling maintenance. Optionally, it can also include details about candidate faulty measurement sub-elements 142 on which the maintenance should be focused. In an example embodiment, the candidate faulty measurement sub-elements can be obtained after computing of each sub-element to each principal component 415. In the embodiment presented in FIG. 3, the principal components 415 are denoted by $v^{(1)},...,v^{(D)}$ and are all $d$-dimensionnal. In that embodiment, computing a contribution of sub-element $s_i$ to principal component $v^{(k)}$ can be done by computing $$m_i^{(k)} = |v_i^{(k)}| / \sum_j |v_j^{(k)}|.$$ In a further example embodiment, any sub-element $s_i$ of which contribution $m_i^{(k)}$ to at least one principal component $v^{(k)}$ is higher than a threshold is considered as faulty. In another further example embodiment, a number $h$ is predefined and any sub-element $s_i$ of which contribution to a principal component is among the highest $h$ contributions to that sub-element is considered as faulty.

The last step of the maintenance prediction process performed by apparatus 14 is the data visualization step 24. For instance, the apparatus can produce a data visualization as shown in FIG. 5.

FIG. 3 shows the mathematical procedure performed by apparatus 14 to perform the dimensionality reduction 22 of FIG. 2. First, the apparatus 14 performs a principal component analysis 410 on the matrix measurement signal 411. The matrix measurement signal 411 is a matrix $X$ where each row represents a time series of measurements for a measurement sub-element. As there are $d$ measurement sub-elements and $T$ measurements, the dimension of the matrix measurement signal is $d \times T$. The first step of the principal component analysis 410 is shown by arrow 4110. It consists in computing the mean matrix 412, denoted by $\mu$. The mean matrix 412 is computed in the following way:

$$\mu_{i,j} = \frac{1}{T} \sum_t X_{i,t}$$

for every $j$. This means that the mean matrix 412 has all its columns identical. Indeed, for a given row $i$, the value of the mean matrix at every column index in that row corresponds to the mean of all values of time series $i$. The next step represented by arrow 4120 consists in computing a difference matrix 413 equal to $X - \mu$ and of dimension $d \times T$. Then, a covariance matrix 414 is computed during step 4130. This covariance matrix is equal to $(X - \mu)(X - \mu)^T$ and of dimension $d \times d$. Arrow 4140 represents the computation of $d'$ principal components 415 of the matrix measurement signal 411. In an example embodiment, $d'$ is a number lower than the number of measurement sub-elements $d$. Preferably, $d'$ is a number comprised between 1 and 4. In order to compute the principal components 415 of the matrix measurement signal 411, the apparatus 14 computes the $d'$ eigenvectors of the covariance matrix 414 associated with the $d'$ highest eigenvalues of the covariance matrix 414. The principal components 415, denoted by $v^{(1)}, ..., v^{(D)}$ are $d$-dimensional. They are the output of the principal component analysis.

In order to obtain a reduced matrix measurement signal 423, further calculations are needed. The reduced matrix signal 423 is the output of the set of calculations referenced as 420 in FIG. 3. The input of the set of calculations 420 is the principal component analysis, as shown by arrow 430. More precisely, the principal components 415 are taken as an input for the set of calculations 420. They first enable to construct a principal component matrix 421, of which columns are the principal components 415. This matrix is denoted by $V$ in FIG. 3 and is of dimension $d \times D$. The next step is to compute a projected matrix 422 as shown by arrow 4210. The projected matrix is the product of the transpose of the matrix measurement signal 411 by the principal component matrix 421. The dimension of the projected matrix is $T \times D$. Finally, in order to obtain the reduced matrix measurement signal 423, the apparatus 14 performs the step represented by arrow 4220 which consists in computing the transpose of the projected matrix 422.

FIG. 4 shows an illustration of a principal component analysis in two dimensions. On this figure, a principal component analysis is performed on the set of points 40. Here, the number of principal components computed is $D = 2$, which is equal to the dimension of the set of points is $d = 2$. Therefore, 2 principal components in 2 dimensions have been computed. In FIG. 4, the two principal components are vectors 41 and 42, which also correspond to the directions along which the variance of the set of points 40 is the highest. This illustrates the fact that principal components of a measurement signal correspond to the directions along which the measurement signal varies the most. In the embodiments represented in FIG. 2 and FIG. 3, the apparatus 14 computes the $d'$ directions along which the matrix measurement signal 411 varies the most.

FIG. 5 shows a visualization 500 of the evolution of the principal time series over time according to the embodiments described in FIG. 2 and FIG. 3, when $D = 4$. The visualization 500 is an example of output for step 24 of FIG. 2. The principal time series of values $(Y_{1,t})_{1 \leq t \leq T}$, $(Y_{2,t})_{1 \leq t \leq T}$, $(Y_{3,t})_{1 \leq t \leq T}$, $(Y_{4,t})_{1 \leq t \leq T}$ are respectively represented by reference figures 51, 52, 53, 54. The change points detected by the change-point detection 22 are times 501, 502, 503, 504 and 505. They represent the times at which the distribution of the principal values vectors $(Y_t)_{1 \leq t \leq T}$ substantially varies. They delimit homogeneous intervals 511, 512, 513, 514, 515 and 515. The distribution of the principal values vectors $(Y_t)_{1 \leq t \leq T}$ is uniform over time in those homogeneous intervals. In particular, this means that the distribution of the values of the series of principal values $(Y_{i,t})_{1 \leq t \leq T}$ is homogeneous within those intervals for all i. Optionally, the visualization can also output the candidate faulty measurement sub-elements $s_i$ on which the maintenance should be focused. Those candidate faulty measurement sub-elements are computed by the apparatus 14 after computing the contributions of all.

FIG. 6 shows a functional diagram of a programmed computer, server, circuitry, or apparatus 600 that may be used for implementing the apparatus for predicting maintenance 14. Computer 600 has a core and several peripherals connected via a communication bus. The major components of the core are a microprocessor 601 (often called the CPU) random access memory (RAM) 602 and read only memory (ROM) 603. The peripherals comprise devices that allow information to be input to the system from users, output to users and stored and retrieved (mass storage devices 604 such as hard disks and network interfaces 605).

The invention is not limited to the described example embodiments. The appended claims are to be construed as embodying all modifications and alternative constructions that may occur to one skilled in the art, and which fairly fall within the basic teaching as set forth herein.

As used in this application, the term "circuitry" may refer to one or more or all of the following:

(a) hardware-only circuit implementations (such as implementations in only analog and/or digital circuitry) and
(b) combinations of hardware circuits and software, such as (as applicable):

(i) a combination of analog and/or digital hardware circuit(s) with software/firmware and
(ii) any portions of hardware processor(s) with software (including digital signal processor(s)), software, and memory(ies) that work together to cause an apparatus, such as a mobile phone or server, to perform various functions) and

(c) hardware circuit(s) and or processor(s), such as a microprocessor(s) or a portion of a microprocessor(s), that requires software (e.g., firmware) for operation, but the software may not be present when it is not needed for operation."

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

Elements such as the apparatus and its components could be or include e.g. hardware means like e.g. an Application-Specific Integrated Circuit (ASIC), or a combination of hardware and software means, e.g. an ASIC and a Field-Programmable Gate Array (FPGA), or at least one microprocessor and at least one memory with software modules located therein, e.g. a programmed computer.

The use of the verb "to comprise" or "to include" and its conjugations does not exclude the presence of elements or steps other than those stated in a claim. Furthermore, the use of the article "a" or "an" preceding an element or step does not exclude the presence of a plurality of such elements or steps. The example embodiments may be implemented by means of hardware as well as software. The same item of hardware may represent several "means".

In the claims, any reference signs placed between parentheses shall not be construed as limiting the scope of the claims.

**Claims**

1. An apparatus (14) for predicting maintenance on a measurement device (10), the apparatus (14) comprising means for:

   - Collecting (1400) a plurality of time series of measurements (13) from a corresponding plurality of measurement sub-elements (12) of the measurement device,
   - Obtaining a matrix measurement signal (411) comprising said time series of measurements (13),
   - Applying a principal components analysis (410) to the matrix measurement signal (411) in order to obtain principal components (415) of the matrix measurement signal, wherein the number of principal components is lower than the number of time series of measurements,
   - Obtaining (420) a reduced matrix measurement signal (423) as a function of the matrix measurement signal (411) and at least one of the principal components (415), wherein the reduced matrix measurement signal comprises:

     along a first dimension of the reduced matrix measurement signal, principal time series of values (51, 52, 53, 54), wherein the number of principal time series of values is lower than the number of time series of measurements of the matrix measurement signal, and
     along a second dimension of the reduced matrix measurement signal, principal values vectors arranged in a chronological order, wherein each principal values vector is defined for a given time and contains the values of all the principal time series at the given time,

   - Performing a change-point detection (22), wherein the change-point detection includes examining successive principal values vectors of the reduced matrix measurement signal, in order to detect at least one change in a distribution over time of the principal values vectors,
   - In response to detecting a change point in the distribution over time of the principal values vectors, emitting (23) a maintenance recommendation (140) relating to maintenance of the measurement device

2. An apparatus (14) according to claim 1, wherein the apparatus (14) further comprises means for computing respective contributions of the measurement sub-elements to at least one of the principal components (415) and wherein emitting a maintenance recommendation (140) includes identifying candidate faulty measurement sub-elements (142) of the measurement device as a function of respective contributions of the measurement sub-elements.

3. An apparatus (14) according to any of the claims 1 and 2, wherein the apparatus comprises means for visualizing (24) an evolution of the reduced matrix measurement signal over time (500) and, in response to detecting a change point in the distribution of principal values vectors, visualizing the detected time (501, 502, 503, 504, 505) at which the the distribution of the principal values vectors changes.

4. An apparatus (14) according to any of the claims 1 to 3, wherein the apparatus further comprises means for sorting the contribution of the measurement sub-elements to a principal component in decreasing order and wherein the candidate faulty measurement sub-elements are a predefined number of measurement sub-elements having the highest contribution to the principal components according to the sorting of the contribution of the measurement sub-elements in decreasing order.

5. An apparatus (14) according to any of the claims 1 to 3, wherein the candidate faulty measurement sub-elements are identified as the measurement sub-elements of which respective contribution to the principal components exceeds a contribution threshold.

6. An apparatus according (14) to any one of claims 1 to 5, wherein the principal component analysis is a Bayesian Principal Components Analysis.

7. An apparatus (14) according to claims 1 to 6, wherein the means for performing a change-point detection include:

   - homogeneity computation means for computing a homogeneity measurement for several sets of successive principal values vectors, wherein the homogeneity measurement represents homogeneity of the distribution of the principal values vectors within the set of principal values vectors

- change-point finding means for finding change points (501, 502, 503, 504, 505), wherein the change points are points in time, wherein the change points delimit homogeneous intervals (511, 512, 513, 514, 515, 516), and wherein a homogeneous interval is a set of successive principal values vectors delimited by the change points (501, 502, 503, 504, 505), and wherein the change points and homogeneous intervals are such that the distribution of the principal values vectors is homogeneous in a homogeneous interval and substantially changes at a change point.

8. An apparatus according to claim 7, wherein the homogeneity measurement is a variance of the set of successive values for which the homogeneity measurement is computed.

9. An apparatus according to claim 7, wherein the homogeneity measurement is a negative log-likelihood of the set of successive values for which the homogeneity measurement is computed.

10. An apparatus according to any of the claims 7 to 9, wherein the change point finding means include means for minimizing a function of the homogeneity measurements.

11. An apparatus according to claim 10, wherein minimizing the function of the homogeneity measurements is performed using an algorithm implemented with dynamic programming.

12. A method for predicting maintenance on a measurement device (10), the method comprising the steps of:

- Collecting (1400) a plurality of time series of measurements (13) from a corresponding plurality of measurement sub-elements (12) of the measurement device,
- Obtaining a matrix measurement signal (411) comprising said time series of measurements,
- Applying a principal components analysis (410) to the matrix measurement signal in order to obtain principal components (415) of the matrix measurement signal, wherein the number of principal components is lower than the number of time series of measurements,
- Obtaining (420) a reduced matrix measurement signal (423) as a function of the matrix measurement signal (411) and at least one of the principal components (415), wherein the reduced matrix measurement signal comprises:

along a first dimension of the reduced matrix measurement signal, principal time series of values (51, 52, 53, 54), wherein the number of principal time series of values is lower than the number of time series of measurements of the matrix measurement signal, and
along a second dimension of the reduced matrix measurement signal, principal values vectors arranged in a chronological order, wherein each principal values vector is defined for a given time and contains the values of all the principal time series at the given time,

- Performing a change-point detection (22), wherein the change-point detection includes examining successive principal values vectors of the reduced matrix measurement signal, in order to detect at least one change in a distribution over time of the principal values vectors,
- In response to detecting a change point in the distribution over time of the principal values vectors, emitting (23) a maintenance recommendation (140) relating to maintenance of the measurement device.

13. A method according to claim 12, wherein the apparatus further comprises the step of computing respective contributions of the measurement sub-elements to at least one of the principal components and wherein emitting (23) a maintenance recommendation (140) includes identifying candidate faulty measurement sub-elements (142) of the measurement device (10) as a function of respective contributions of the measurement sub-elements.

14. A method according to any of the claims 12 and 13, wherein the method comprises the step of visualizing (24) an evolution of the reduced matrix measurement signal over time (500) and, in response to detecting a change point (501, 502, 503, 504, 505) in the distribution of the principal values vectors, visualizing the detected time (501, 502, 503, 504, 505) at which the distribution of the principal values vectors changes.

15. A method according any one of claims 12 to 14, wherein the step of performing a change-point detection includes:

- computing for several sets of successive principal values vector a homogeneity measurement, wherein the homogeneity measurement represents homogeneity of the distribution of the principal values vectors within the set of principal values vector,
- finding change points (501, 502, 503, 504, 505), wherein the change points are points in time, wherein the change points delimit homogeneous intervals (511, 512, 513, 514, 515, 516), and wherein a homogeneous interval is a set of successive principal values vectors delimited by the change points (501, 502, 503, 504, 505), and wherein the change points and homogeneous intervals are such that the distribution of the principal values vectors is homogeneous in a homogeneous interval and substantially changes at a change point.

FIG. 1

FIG. 2

411 $X = \begin{pmatrix} X_{1,1} & \cdots & X_{1,T} \\ \vdots & \cdots & \vdots \\ X_{d,1} & \cdots & X_{d,T} \end{pmatrix}$

↓ 4110

412 $\mu = \begin{pmatrix} \mu_1 & \cdots & \mu_1 \\ \vdots & \cdots & \vdots \\ \mu_d & \cdots & \mu_d \end{pmatrix}$

↓ 4120

413 $X - \mu = \begin{pmatrix} X_{1,1} - \mu_1 & \cdots & X_{1,T} - \mu_1 \\ \vdots & \cdots & \vdots \\ X_{d,1} - \mu_d & \cdots & X_{d,T} - \mu_d \end{pmatrix}$

↓ 4130

414 $(X - \mu)(X - \mu)^T$

↓ 4140

415 $v^{(1)}, ..., v^{(D)}$

410

430 →

421 $V = \begin{pmatrix} v_1^{(1)} & \cdots & v_1^{(D)} \\ \vdots & & \vdots \\ v_d^{(1)} & \cdots & v_d^{(D)} \end{pmatrix}$

↓ 4210

422 $X_p = X^T V$

↓ 4220

423 $Y = X_p^T$

420

FIG. 3

FIG. 4

FIG. 5

FIG. 6

$$Y = \begin{pmatrix} Y_{1,1} & \cdots & Y_{1,T} \\ \vdots & \ldots & \vdots \\ Y_{D,1} & \cdots & Y_{D,T} \end{pmatrix}$$

423

FIG. 7

Europäisches
Patentamt

European
Patent Office

Office européen
des brevets

# EUROPEAN SEARCH REPORT

**Application Number**

EP 21 16 5327

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2016/350671 A1 (MORRIS II ROBERT G [US] ET AL) 1 December 2016 (2016-12-01) * abstract * * paragraphs [0031] - [0033], [0039] - [0040] * ----- | 1-15 | INV. G06Q10/04 G06Q10/06 G06Q10/00 |
| X,D | US 2002/128799 A1 (LOECHER MARKUS [US]) 12 September 2002 (2002-09-12) * abstract * * paragraphs [0008] - [0010], [0013] * ----- | 1-15 | |

TECHNICAL FIELDS
SEARCHED      (IPC)

G06Q

The present search report has been drawn up for all claims

| Place of search | Date of completion of the search | Examiner |
|---|---|---|
| Munich | 20 August 2021 | Moltenbrey, Michael |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 21 16 5327

This annex lists the patent family members relating to the patent documents cited in the above-mentioned European search report.
The members are as contained in the European Patent Office EDP file on
The European Patent Office is in no way liable for these particulars which are merely given for the purpose of information.

20-08-2021

| Patent document cited in search report | Publication date | Patent family member(s) | Publication date |
|---|---|---|---|
| US 2016350671 A1 | 01-12-2016 | NONE | |
| US 2002128799 A1 | 12-09-2002 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6847918 B

**Non-patent literature cited in the description**

- **RAUSAND, M. ; BARROS, A. ; HOYLAND, A.** System reliability theory: models, statistical methods, and applications. John Wiley & Sons, 2020
- **WILSON, PAUL F. ; LARRY D. DELL ; GAYLOR F. ANDERSON.** Root Cause Analysis: A Tool for Total Quality Management. *The Journal for Healthcare Quality (JHQ),* 1996, vol. 18 (1), 40
- **TRUONG, C. ; OUDRE, L. ; VAYATIS, N.** Selective review of offline change point detection methods. *Signal Processing,* 2020, vol. 167, 107299
- **Y. GUÉDON.** Exploring the latent segmentation space for the assessment of multiple change-point models. *Comput. Stat.,* 2013, vol. 28 (6), 2641-2678
- **RIGAILL, G.** A pruned dynamic programming algorithm to recover the best segmentations with 1 to K_max change-points. *Journal de la Société Française de Statistique,* 2015, vol. 156 (4), 180-205